# EUROPEAN PATENT APPLICATION

(11) **EP 2 750 014 A2**
(43) Date of publication of application: **02.07.2014**
(21) Application number: 13199359.4
(22) Date of filing: 23.12.2013
(51) Int. Cl.: G06F 3/0484, G06F 3/0488

(54) **Electronic apparatus, and method of controlling an electronic apparatus through motion input**

(30) Priority: 27.12.2012 KR 20120155207
(71) Applicant: Samsung Electronics Co., Ltd, Gyeonggi-do 443-742 (KR)
(72) Inventor: Jang, Sung-hyun, Seoul (KR); Kim, Jung-geun, Gyeonggi-do (KR); Lee, Dong-heon, Seoul (KR); Kim, Jae-kwon, Gyeonggi-do (KR)
(74) Representative: Walaski, Jan Filip

(57) **Abstract**

An electronic apparatus and a control method thereof for controlling through motion input are provided. The method for controlling the electronic apparatus includes in response to a predetermined mode trigger command being input, changing a mode of the electronic apparatus to a first motion task mode in which a motion task is performed using two pointers, in response to the mode being changed to the first motion task mode, displaying a UI to perform the first motion task mode on a display screen, and, in response to a user motion command using the two pointers being input, performing a motion task which corresponds to the user motion command, and displaying information on the performed motion task on the display screen.

## Description

The present invention relates to an electronic apparatus and a control method thereof. More particularly, the exemplary embodiments relate to an electronic apparatus which is controlled according to a user motion input through a motion input, and a control method thereof.

With the development of electronic technologies, various kinds of electronic apparatuses have been developed and distributed. In particular, various types of electronic apparatuses including a television (TV) are being widely used in households. Such electronic apparatuses are equipped with a wide variety of functions in order to live up to the expectations of users. For instance, a TV is connected to the Internet and provides Internet-based services. In addition, users may view a number of digital broadcasting channels through a TV.

Accordingly, various input methods are required to effectively use such functions of electronic apparatuses. For example, input methods using a remote controller, a mouse, and a touch pad have been applied to electronic apparatuses.

However, those simple input methods put a limit on effective use of various functions of electronic apparatuses. For example, if all functions of an electronic apparatus are controlled by a remote controller, it is inevitable that there will be an increase the number of buttons on the remote controller. In such a situation, it is not easy for users to become accustomed to a method of using such a remote controller. In addition, if all menus are displayed on the screen, users are required to go through complicated menu trees one by one in order to select a desired menu, which causes great inconvenience to the users.

In order to overcome such problems, motion recognition technology for more easily control electronic apparatuses and intuitively is developing. That is, technology which recognizes a user motion and controls electronic apparatuses is in the spotlight. However, related-art motion recognition technology uses a single object or body and thus puts a limit on using modern electronic apparatuses that require various input methods.

One or more exemplary embodiments may overcome the above disadvantages and other disadvantages not described above.

One or more exemplary embodiments provide an electronic apparatus which can perform a motion task using two pointers, and a control method thereof.

According to an aspect of an exemplary embodiment, there is provided a method of controlling an electronic apparatus, the method including in response to a predetermined mode trigger command being input, changing a mode of the electronic apparatus to a first motion task mode in which a motion task is performed using two pointers; a first displaying operation which, in response to the mode being changed to the first motion task mode, displays a UI to perform the first motion task mode on a display screen; and a second displaying operation which, in response to a user motion command using the two pointers being input, performs a motion task corresponding to the user motion command, and displays information related to the performed motion task on the display screen.

The second displaying operation may include, in response to a user command to change a distance between the two pointers being input, performing a task of magnifying or reducing an image displayed on the display screen, with reference to the UI.

The performing the task may include, in response to a user command to move the two pointers further apart being input, performing a task of magnifying the image displayed on the display screen with reference to the UI, and, in response to a user command to move the two pointers closer together being input, performing a task of reducing the image displayed on the display screen with reference to the UI.

The second displaying operation may further include displaying information related to a ratio in which the image displayed on the display screen is magnified or reduced on the display screen, along with the UI.

The second displaying operation may include, in response to a command to move at least one of the two pointers being input and then an angle that is formed between a line segment formed by the two pointers before the at least one pointer is moved and a line segment formed by the two pointers after the at least one pointer is moved is greater than or equal to a predetermined value, performing a task of rotating the image displayed on the display screen, according to the angle formed between the line segments.

The second displaying operation may further include displaying information related to the angle by which the image displayed on the display screen is rotated on the display screen along with the UI.

The UI may be a circular UI which defines a line segment connecting the two pointers as a diameter, and the information related to the performed motion task may be displayed in the circular UI.

The predetermined mode trigger command may be a shake motion command which swings two objects multiple times to control the two pointers.

The method may further include, in response to one of the two objects to control the two pointers not being sensed for a predetermined time, changing the first motion task mode to a second motion task mode in which a motion task is performed using one pointer.

According to an aspect of another exemplary embodiment, there is provided an electronic apparatus including: a motion input which receives a user motion; a display; and a controller which, in response to a predetermined mode trigger command being input through the motion input, changes a mode of the electronic apparatus to a first motion task mode in which a motion task is performed using two pointers, displays a UI to perform the first motion task mode on a display screen, in response to a user motion command using the two pointers being input through the motion input, performs a motion task which corresponds to the user motion command, and controls the display in order to display on the display screen information related to the performed motion task.

In response to a user command to change a distance between the two pointers being input through the motion input, the controller may perform a task of magnifying or reducing an image displayed on the display screen with reference to the UI.

In response to a user command to move the two pointers further apart being input, the controller may perform a task of magnifying the image displayed on the display screen with reference to the UI, and, in response to a user command to move the two pointers closer together being input, the controller may perform a task of reducing the image displayed on the display screen with reference to the UI.

The controller may control the display to display information related to a ratio in which the image displayed on the display screen is magnified or reduced on the display screen along with the UI.

In response to a command to move at least one of the two pointers being input through the motion input unit and then an angle that is formed between a line segment formed by the two pointers before the at least one pointer is moved and a line segment formed by the two pointers after the at least one pointer is moved is greater than or equal to a predetermined value, the controller may perform a task of rotating the image displayed on the display screen according to the angle formed between the line segments.

The controller may display information related to the angle by which the image displayed on the display screen is rotated on the display screen along with the UI.

The UI may be a circular UI which defines a line segment connecting the two pointers as a diameter, and the information related to the performed motion task may be displayed in the circular UI.

The predetermined mode trigger command may be a shake motion command which swings two objects multiple times to control the two pointers.

In response to one of the two objects to control the two pointers not being sensed for a predetermined time, the controller may change the first motion task mode to a second motion task mode in which a motion task is performed using one pointer.

An aspect of an exemplary embodiment may provide an electronic apparatus including: a display; and a controller which, in response to a predetermined mode trigger command being input through a user's motion input, changes a mode of the electronic apparatus to a first motion task mode in which a motion task is performed using two pointers, displays a UI to perform the first motion task mode on a display on a display screen, performs a motion task, and controls the display in order to display information related to the performed motion task.

In response to a user command to change a distance between the two pointers being input, the controller may perform a task of magnifying or reducing an image displayed on the display screen with reference to the UI.

The above and/or other aspects will be more apparent by describing in detail exemplary embodiments, with reference to the accompanying drawings, in which:
FIGS. 1 to 3 are block diagrams which explain an electronic apparatus, according to various exemplary embodiments;
FIG. 4 to 6 are views which explain a method of performing a task of reducing or magnifying a display screen, according to an exemplary embodiment;
FIGS. 7 and 8 are views which explain a method of performing a task of rotating a display screen, according to an exemplary embodiment; and
FIG. 9 is a flowchart which explains a method of controlling an electronic apparatus, according to an exemplary embodiment.

Hereinafter, exemplary embodiments will be described in greater detail with reference to the accompanying drawings.

In the following description, the same reference numerals are used for the same elements when they are depicted in different drawings. The matters defined in the description, such as detailed construction and elements, are provided to assist in a comprehensive understanding of the exemplary embodiments. Thus, it is apparent that exemplary embodiments can be carried out without those specifically defined matters. Also, functions or elements known in the related art are not described in detail since they would obscure the exemplary embodiments with unnecessary detail.

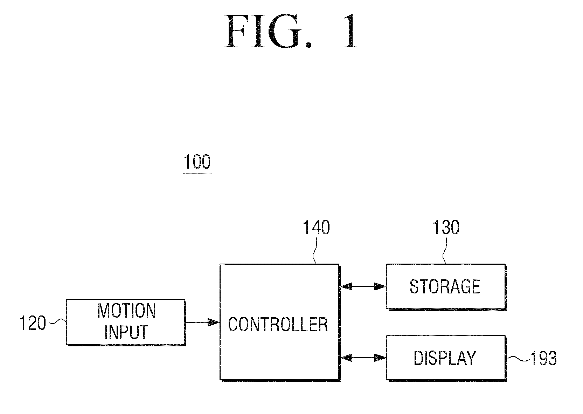

FIG. 1 is a block diagram which schematically illustrates an electronic apparatus 100 according to an exemplary embodiment. Referring to FIG. 1, the electronic apparatus 100 includes a motion input 120, a storage 130, a controller 140, and a display 193. The electronic apparatus 100 may be a smart TV. However, this is merely an example and the electronic apparatus 100 may be implemented by using various electronic apparatuses such as a smart-phone, a tablet PC or a notebook PC.

The motion input 120 receives a video signal (for example, continuous frames) which is generated by photographing a user motion, and provides the video signal to the controller 140. For example, the motion input 120 may be implemented by using a camera unit which includes a lens and an image sensor. Also, the motion input 120 may be implemented in an all-in-one type device along with the electronic apparatus 100 or may be implemented in a separate type device. The separated motion input 120 may be connected to the electronic apparatus 100 through a wired or wireless network.

The storage 130 stores various data and programs for driving and controlling the electronic apparatus 100. The storage 130 stores a motion recognition module to recognize a motion which is input through the motion input 120.

The storage 130 may include a motion database. The motion database refers to a database in which a predetermined motion and a motion task matching the predetermined motion are recorded.

The display 193 displays video signals which are input from various sources. For example, the display 193 may display an image which corresponds to a broadcast signal which is received through a broadcast receiver. Also, the display 193 may display video data (for example, a moving image) which is input through an external terminal input.

In particular, in response to a mode of the electronic apparatus 100 being changed to a both hands task mode in which a motion task is performed using two pointers, the display 193 may display not only two pointers but may also display also a user interface (UI) which performs a motion task using the two pointers (hereinafter, referred to as a "both hands task"). The UI may be a circular UI.

The controller 140 controls the motion input 120, the storage 130, and the display 193. The controller 140 may include a read only memory (ROM) and a random access memory (RAM) which stores a module and data for controlling a central processing unit (CPU) and the electronic apparatus 100.

In response to a motion being input through the motion input 120, the controller 140 recognizes the motion using a motion sensing module and the motion database. The motion recognition divides an image (for example, continuous frames) which corresponds to a user motion input through the motion input 120 into a background and a hand region (for example, stretching fingers or curling fingers or clenching a fist) using a motion recognition module, and recognizes continuous hand movements. In response to a user motion being input, the controller 140 stores a received image on a frame basis and senses an object (for example, user's hand) of the user motion using the stored frame. The controller 140 detects the object by sensing at least one of a shape, color, and movement of the object included in the frame. The controller 140 may track the movement of the detected object using a location of the object included in each of the plurality of frames.

The controller 140 determines the motion according to the shape and the movement of the tracked object. For example, the controller 140 may determine the user motion using at least one of a change in the shape of the object, a speed, a location and a direction of the object. The user motion includes a grabbing motion, which is a motion of a clenching of a hand, a pointing move which is a motion of moving a displayed cursor using a hand, a slap which is a motion of moving a hand in one direction at more than a certain speed, a shake which is motion of swinging a hand horizontally or vertically, and a rotation which is a motion of rotating a hand. The technical idea of the present disclosure may also be applied to motions other than the aforementioned motions. For example, the user motion may further include a spread motion which is a motion of opening a clenched hand.

The controller 140 determines whether the object deviates from a predetermined region (for example, a square of 40cm×40cm) within a predetermined time (for example, 800ms) to determine whether the user motion is a pointing move or a slap. If the object does not deviate from the predetermined region within the predetermined time, the controller 140 may determine that the user motion is a pointing move. If the object deviates from the predetermined region within the predetermined time, the controller 140 may determine that the user motion is a slap. For example, in response to the speed of the object being determined to be lower than a predetermined speed (for example, 30cm/s), the controller 140 determines that the user motion is a pointing move. In response to the speed of the object exceeding the predetermined speed, the controller 140 determines that the user motion is a slap.
As described above, the controller 140 performs of the electronic apparatus 100 a task of using the recognized motion. The task of the electronic apparatus 100 includes at least one of functions that can be performed by the electronic apparatus 100, such as channel changing, volume control, content (for example, a moving image, music, or photo) replay or internet browsing.

In particular, in response to a mode trigger command to change a mode to a both hands task mode being input, the controller 140 changes a mode of the electronic apparatus 100 to a both hands task mode in which a motion task is performed using two pointers.

At this time, the mode trigger command to change the mode to the both hands task mode may be input using one hand at a time in sequence or may be input by using both hands simultaneously.

Specifically, in response to a motion trigger command using one hand being input through the motion input 120, the controller 140 may change a mode to a motion task mode in which a motion task is performed using one hand. In response to a motion trigger command using the other hand being input through the motion input 120 in the motion task mode, the controller 140 may recognize that the mode trigger command to change the mode to the both hands task mode is input. The motion trigger command using one hand may be a shake motion of swinging one hand horizontally multiple times. Alternatively, if a shake motion of swinging both hands horizontally multiple times at the same time is input through the motion input 120 in a mode in which the electronic apparatus 100 is controlled using a remote controller, the controller 140 may recognize that a both hands trigger command has been input.

In response to the mode being changed to the both hands task mode, the controller 140 controls the display 193 to display a both hands control UI in order to perform a both hands task on a display screen.

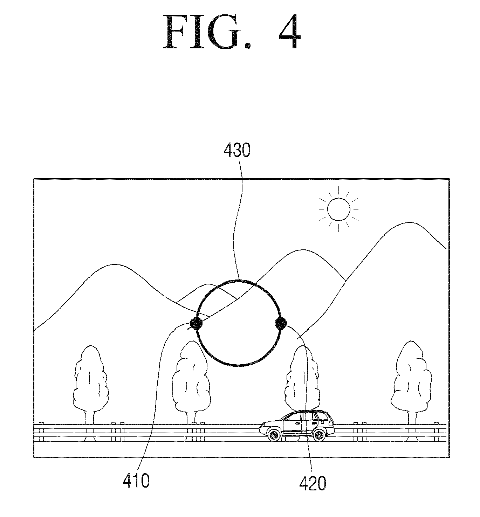

Specifically, in response to the mode being changed to the both hands task mode, the controller 140 may control the display 193 in order to display two pointers 410 and 420 and a both hands control UI 430 on a center of the display screen as shown in FIG. 4. At this time, the both hands control UI 430 may be a circular UI that defines a line segment connecting the two pointers 410 and 420 as a diameter as shown in FIG. 4. Then, in response to a user motion command using the two pointers being input, the controller 140 may perform a motion task which corresponds to the user motion command and may control the display 193 to display on the display screen information related to the performed motion task.

According to an exemplary embodiment, in response to a user command to change a distance between the two pointers 410 and 420 (for example, a user command to move user's both hands further apart or closer together) being input through the motion input 120, the controller 140 may perform a task of magnifying or reducing an image displayed on the display screen with reference to the both hands control UI 430.

In particular, in response to a user command to move the two pointers 410 and 420 further apart being input, the controller 140 may perform a task of magnifying an image displayed on the display screen with reference to the both hands control UI 430. At this time, the controller 140 may adjust a magnification ratio according to a distance between the two pointers 410 and 420. For example, the controller 140 may increase the magnification ratio as the distance between the two pointers 410 and 420 increases. The controller 140 may control the display 193 to display information on the magnification ratio of the image in the both hands control UI 430.

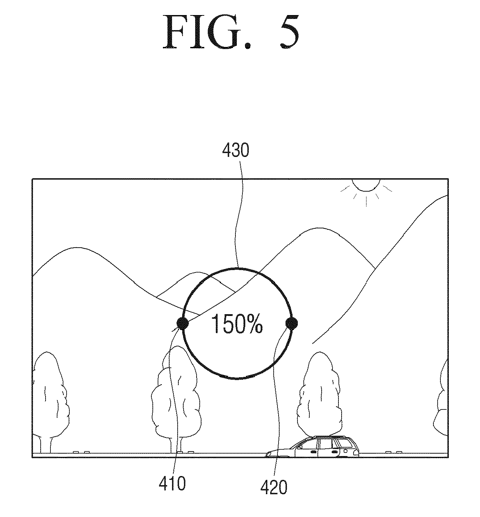

For example, in response to the user command to move the two pointers 410 and 420 further apart is input and the magnification ratio of the image is determined to be 150%, the controller 140 may perform a task of magnifying the image by 150% and may display text information of "150%" in the both hands control UI 430 as information related to the magnification ratio, as shown in FIG. 5. At this time, the controller 140 may also increase the size of the both hands control UI 430.

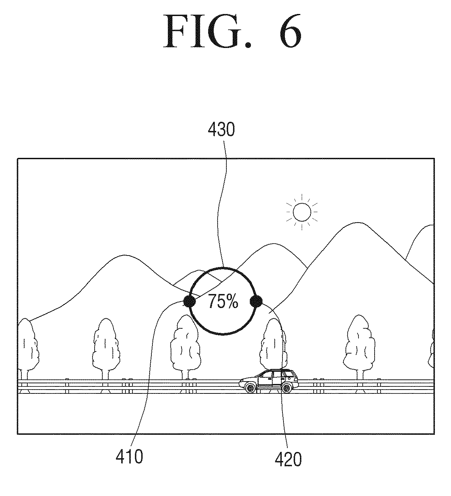

In response to a user command to move the two pointers 410 and 420 closer together being input, the controller 140 may perform a task of reducing the image displayed on the display screen with reference to the both hands control UI 430 as shown in FIG. 6. At this time, the controller 140 may adjust a reduction ratio according to a distance between the two pointers 410 and 420. For example, the controller 140 may increase the reduction ratio as the distance between the two pointers 410 and 420 decreases. The controller 140 may control the display 193 to display information related to the reduction ratio of the image in the both hands control UI 430.

For example, in response to the user command to move the two pointers 410 and 420 closer together being input and the reduction ratio of the image is determined to be 75%, the controller 140 may perform a task of reducing the image by 75% and may display text information of "75%" in the both hands control UI 430 as information related to the reduction ratio, as shown in FIG. 6. At this time, the controller 140 may also reduce the size of the both hands control UI 430.

According to another exemplar embodiment, in response to a command to move at least one of two pointers 710 and 720 is input, and then an angle that is formed between a line segment formed by the two pointers before the pointer is moved and a line segment formed by the two pointers after the pointer is moved is greater than or equal to a predetermined value, the controller 140 may perform a task of rotating the image displayed on the display screen according to the angle.

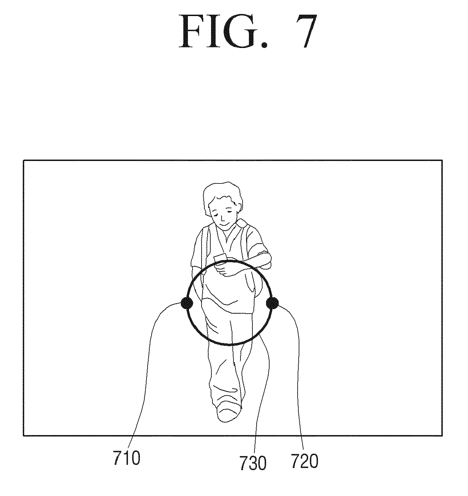

Specifically, in response to a command to move at least one of the two pointers 710 and 720 is input while the two pointers 710 and 720 and a both hands control UI 730 are displayed as shown in FIG. 7, the controller 140 determines an angle that is formed between a line segment formed by the two pointers before the pointer is moved and a line segment formed by the two pointers after the pointer is moved. If the determined angle is greater than or equal to a predetermined value (for example, 30 degrees), the controller 140 may perform a task of rotating the image displayed on the display screen by a predetermined angle (for example, 90 degrees).

At this time, the angle by which the image displayed on the display screen is rotated may be set to a predetermined angle (for example, 90, 180, or 270 degrees). However, this is merely an example, and the angle may correspond to the angle that is formed between the line segment formed by the two pointers before the pointer is moved and the line segment formed by the two pointers after the pointer is moved.

The controller 140 may control the display 193 to display information on the angle by which the image displayed on the display screen is rotated along with the both hands control UI 730.

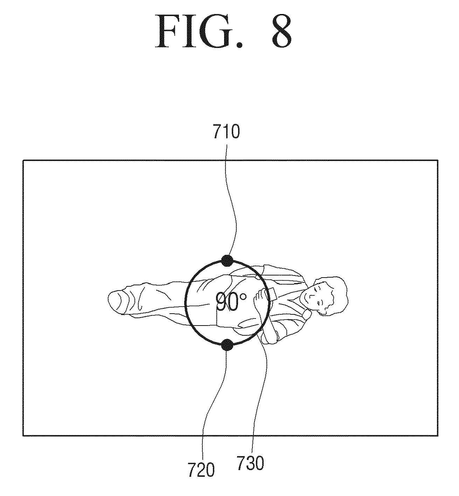

For example, in response to a user command to move the second pointer 720 being input, and then an angle that is formed between a line segment formed by the two pointers 710 and 720 before the pointer 720 is moved and a line segment formed by the two pointers 710 and 720 after the pointer 720 is moved exceeds 30 degrees, the controller 140 may rotate the image displayed on the display screen by 90 degrees and may display text information of "90°" in the both hands control UI 730 as information related to the rotational angle, as shown in FIG. 8. At this time, the controller 140 may also rotate the locations of the two pointers 710 and 720.

As described above, the user can perform a motion task using the both hands and can intuitively identify information related to the motion task by means of the electronic apparatus 100.

In response to one of the two hands to control the two pointers not being sensed for a predetermined time, the controller 140 may change the both hands task mode of the electronic apparatus 100 to the motion task mode in which a motion task is performed using one pointer.

Although the information related to the motion task is displayed in the both hands control UI in the above exemplary embodiment, this is merely an example. The information related to the motion task may be displayed on one side of the display screen (for example, a right upper end).

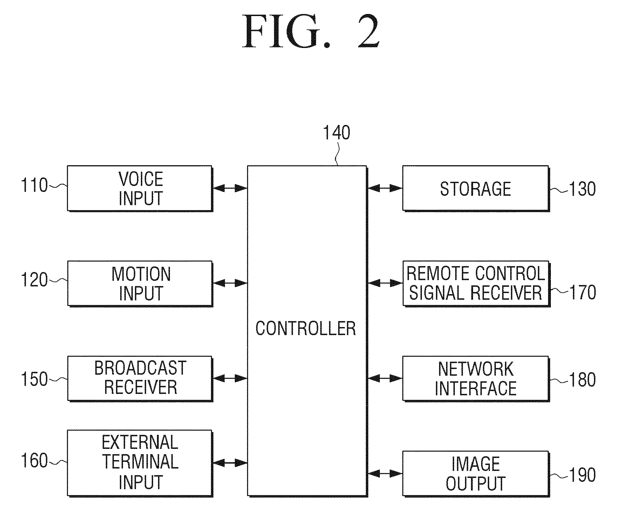

FIG. 2 is a block diagram which illustrates an electronic apparatus 100 according to another exemplary embodiment. Referring to FIG. 2, the electronic apparatus 100 includes a voice input 110, a motion input 120, a storage 130, a controller 140, a broadcast receiver 150, an external terminal input 160, a remote control signal receiver 170, a network interface 180, and an image output 190. The electronic apparatus 100 shown in FIG. 2 may be implemented as a set-top box.

The motion input 120, the storage 130, and the controller 140 shown in FIG. 2 are the same as the motion input 120, the storage 130, and the controller 140 shown in FIG. 1 and thus detailed descriptions thereof are omitted.

The voice input 110 receives a user's uttered voice. The vice input 110 converts an input voice signal into an electric signal and outputs the electric signal to the controller 140. The voice input 110 may be implemented as a microphone. Also, the voice input 110 may be implemented in an all-in-one type device along with the electronic apparatus 100 or may be implemented in an separate type of device. The separated voice input 110 may be connected to the electronic apparatus 100 through a wired or wireless network.

The broadcast receiver 150 receives a broadcast signal from an external source in a wired or wireless manner. The broadcast signal includes video data, audio data, and additional data (for example, an electronic program guide (EPG)). The broadcast receiver 150 may receive broadcast signals from various sources such as a terrestrial broadcast, a cable broadcast, a satellite broadcast and an internet broadcast.

The external terminal input 160 may receive video data (for example, a moving image or a photo) and audio data (for example, music) from an external source of the electronic apparatus 100. The external terminal input 160 may include at least one of a high-definition multimedia interface (HDMI) input terminal, a component input terminal, a PC input terminal and a USB input terminal. The remote control signal receiver 170 receives a remote control signal which is input from an external remote controller. The remote control signal receiver 170 may receive the remote control signal when the electronic apparatus 100 is in a voice task mode or in a motion task mode.

The network interface 180 may connect the electronic apparatus 100 and an external apparatus (for example, a server) to each other, under the control of the controller 140. The controller 140 may download an application from the external apparatus connected to the electronic apparatus 100 through the network interface 180 or may perform web browsing. The network interface 180 may provide at least one of Ethernet, a wireless local area network (LAN) 182, and Bluetooth®.

The image output 190 outputs external broadcast signals which are received through the broadcast receiver 150, video data which is input from the external terminal input 160, or video data which is stored in the storage 130 to an external electronic apparatus (for example, a monitor or a TV).

In response to a user voice being input from the voice input 110, the controller 140 recognizes the voice using a voice recognition module and a voice database. The voice recognition may be divided into isolated word recognition that recognizes an uttered voice by distinguishing words according to a form of an input voice, continuous speech recognition that recognizes a continuous word, a continuous sentence, a dialogic voice, and keyword spotting which is an intermediate type between the isolated word recognition and the continuous speech recognition, and which recognizes a voice by detecting a pre-defined keyword.

In response to a user voice being input, the controller 140 determines a voice section by detecting a beginning and an end of the voice uttered by the user from an input voice signal. The controller 140 calculates the energy of the input voice signal, classifies an energy level of the voice signal according to the calculated energy, and detects the voice through dynamic programming. The controller 140 generates phoneme data by detecting a phoneme, which is the smallest unit of voice, from the voice signal within the detected voice section based on an acoustic model. The controller 140 generates text information by applying a hidden Markov model (HMM) to the generated phoneme data. However, the above-described voice recognition method is merely an example and other voice recognition methods may be used. According to the above-described method, the controller 140 recognizes the user voice included in the voice signal.

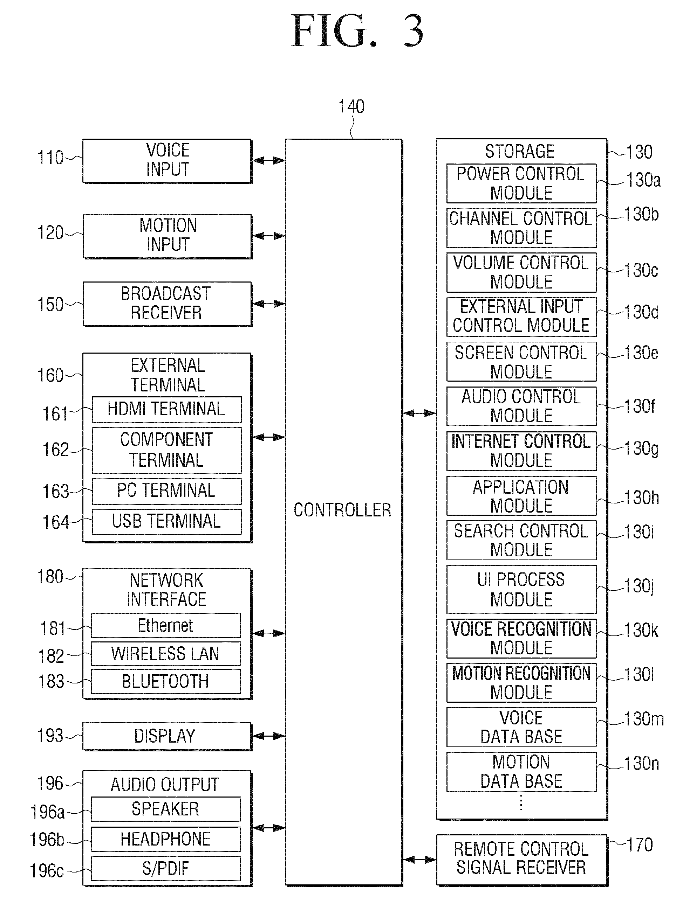

FIG. 3 is a block diagram which illustrates an electronic apparatus 100 according to still another exemplary embodiment. As shown in FIG. 3, the electronic apparatus 100 includes a voice input 110, a motion input 120, a storage 130, a controller 140, a broadcast receiver 150, an external terminal input 160, a remote control signal receiver 170, a network interface 180, a display 193, and an audio output unit 196. The electronic apparatus 100 may be a digital TV, but is not limited thereto.

The voice input 110, the motion input 120, the storage 130, the controller 140, the broadcast receiver 150, the external terminal input 160, the remote control signal receiver 170, the network interface 180, and the display 193 shown in FIG. 3 are the same as those of FIGS. 1 and 2 having the same reference numerals, and thus detailed descriptions thereof are omitted.

The audio output 196 outputs a voice which corresponds to a broadcast signal under the control of the controller 140. The audio output 196 may include at least one of a speaker i96a, a headphone output terminal 196b, and an S/PDIF output terminal 163c.

As shown in FIG. 3, the storage 130 includes a power control module 130a, a channel control module 130b, a volume control module 130c, an external input control module 130d, a screen control module 130e, an audio control module 130f, an internet control module 130g, an application module 130h, a search control module 130i, a UI process module 130j, a voice recognition module 130k, a motion recognition module 130l, a voice database 130m and a motion database 130n. These modules 130a to 130n may be implemented by using software to respectively perform a power control function, a channel control function, a volume control function, an external input control function, a screen control function, an audio control function, an internet control function, an application execution function, a search control function, and a UI process function. The controller 140 may perform a corresponding function by executing the software stored in the storage 130.

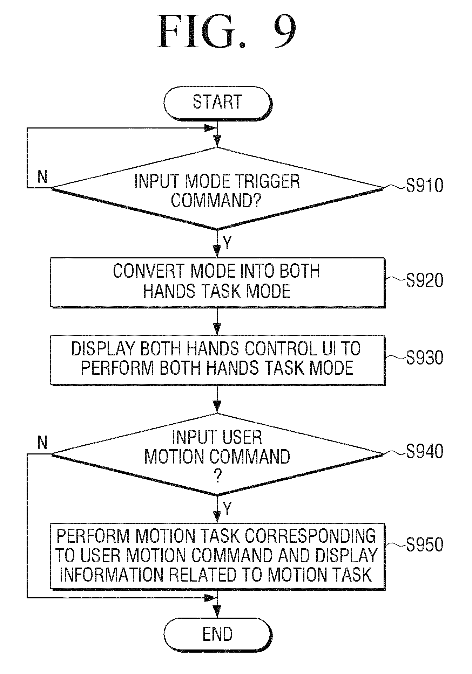

Hereinafter, a method of controlling an electronic apparatus will be explained with reference to FIG. 9.

First, the electronic apparatus 100 determines whether or not a mode trigger command to enter a both hands task mode is input (S910). The mode trigger command to enter the both hands task mode may be a motion of swinging two objects (for example, user's hands) multiple times in order to control a pointer.

In response to the mode trigger command being input (S910-Y), the electronic apparatus 100 changes a mode of the electronic apparatus 100 to the both hands task mode (S920). The both hands task mode is a mode in which a motion task is performed using two pointers.

The electronic apparatus 100 displays a both hands control UI to perform the both hands task mode (S930). The both hands control UI may be a circular graphic user interface (GUI) which defines a line segment as a diameter formed by the two pointers.

The electronic apparatus 100 determines whether or not a user motion command is input (S940). The user motion command is a motion of moving the user's two hands further apart or closer together, or a motion of moving at least one of the two hands such that an angle that is formed between a line segment formed by the two hands before the one hand is moved and a line segment formed by the two hands after the one hand is moved is greater than or equal to a predetermined value.

In response to the user motion command being input (S940-Y), the electronic apparatus 100 performs a motion task which corresponds to the user motion command and displays information related to the motion task (S950). Specifically, in response to a user command to change a distance between the two pointers 410 and 420 (for example, a user command to move the user's both hands further apart or closer together) being input through the motion input 120, the electronic apparatus 100 may perform a task of magnifying or reducing an image displayed on a display screen with reference to the both hands control UI, and may display a magnification ratio or a reduction ratio in the both hands control UI. Also, in response to a command to move at least one of the two pointers 710 and 720 being input and then an angle that is formed between a line segment formed by the two pointers before the one pointer is moved and a line segment formed by the two pointers after the one pointer is moved is greater than or equal to predetermined angle, the electronic apparatus 100 may perform a task of rotating the image displayed on the display screen according to the angle and may display a rotational angle in the both hands control UI.

According to the control method as described above, the user can perform a motion task using both hands and can intuitively identify information related to the motion task.

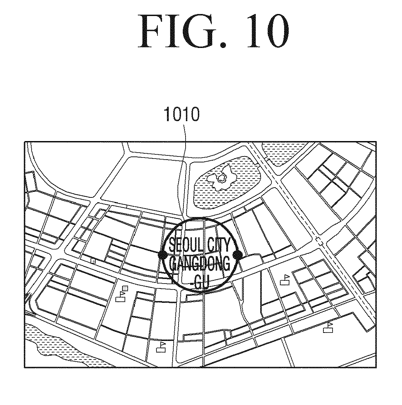

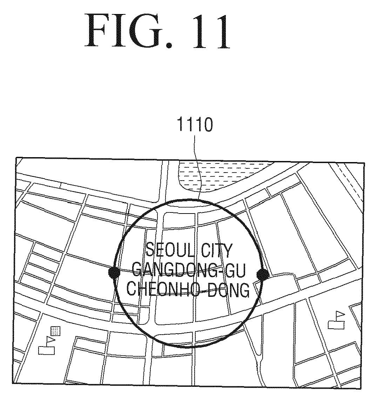

According to another exemplary embodiment, in response to a user motion command using two pointers being input, the electronic apparatus 100 may perform a motion task which corresponds to the user motion command and may display information on an image which is changed by the user motion task in the UI. Specifically, in response to a UI 1010 being displayed on a map as shown in FIG. 10, the electronic apparatus 100 may display information on a location indicated by the UI 1010 in the UI 1010. Also, in response to a command to magnify an image being input using the two pointers, the electronic apparatus 100 may magnify the map and may display more detailed information on the location in a magnified UI 1110 than the information provided in the previous UI 1010. For example, the electronic apparatus 100 may display information on "city" and "gu" in the previous UI 1010 as location information, and may further display information on "dong" in addition to the information on "city" and "gu" in the magnified UI 1110 as location information.

A program code to perform the above-described control method according to the various exemplary embodiments may be stored in various types of recording media. Specifically, the program code may be stored in various types of recording media readable by a terminal apparatus, such as a random access memory (RAM), a flash memory, a read only memory (ROM), an erasable programmable ROM (EPROM), an electronically erasable and programmable ROM (EEPROM), a register, a hard disk, a removable disk, a memory card, a USB memory, and a CD-ROM.

The foregoing exemplary embodiments and advantages are merely exemplary and are not to be construed as limiting the disclosure. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of controlling an electronic apparatus, the method comprising:
if a predetermined mode trigger command is input, changing a mode of the electronic apparatus to a first motion task mode in which a motion task is performed using two pointers;
a first displaying operation which, if the mode is changed to the first motion task mode, displays a UI to perform the first motion task mode on a display screen; and
a second displaying operation which, if a user motion command using the two pointers is input, performs a motion task corresponding to the user motion command, and displays information related to the performed motion task on the display screen.

2. The method as claimed in claim 1, wherein the second displaying operation comprises, if a user command to change a distance between the two pointers is input, performing a task of magnifying or reducing an image displayed on the display screen with reference to the UI.

3. The method as claimed in claim 2, wherein the performing the task comprises, if a user command to move the two pointers further apart is input, performing a task of magnifying the image displayed on the display screen with reference to the UI, and, if a user command to move the two pointers closer together is input, performing a task of reducing the image displayed on the display screen with reference to the UI.

4. The method as claimed in claim 2 or 3, wherein the second displaying operation further comprises displaying information related to a ratio in which the image displayed on the display screen is magnified or reduced on the display screen along with the UI.

5. The method as claimed in claim 1, wherein the second displaying operation comprises, if a command to move at least one of the two pointers is input and then an angle that is formed between a line segment formed by the two pointers before the at least one pointer is moved and a line segment formed by the two pointers after the at least one pointer is moved is greater than or equal to a predetermined value, performing a task of rotating the image displayed on the display screen according to the angle.

6. The method as claimed in claim 5, wherein the second displaying operation further comprises displaying information related to the angle by which the image displayed on the display screen is rotated on the display screen along with the UI.

7. The method as claimed in any one of claims 1 to 6, wherein the UI is a circular UI which defines a line segment connecting the two pointers as a diameter,
wherein the information on the performed motion task is displayed in the circular UI.

8. The method as claimed in any one of claims 1 to 7, wherein the predetermined mode trigger command is a shake motion command to swing two objects multiple times to control the two pointers.

9. The method as claimed in any one of claims 1 to 8, further comprising, if one of the two objects to control the two pointers is not sensed for a predetermined time, changing the first motion task mode to a second motion task mode in which a motion task is performed using one pointer.

10. An electronic apparatus comprising:
a motion input unit which receives a user motion;
a display; and
a controller which, if a predetermined mode trigger command is input through the motion input unit, changes a mode of the electronic apparatus to a first motion task mode in which a motion task is performed using two pointers, displays a UI to perform the first motion task mode on a display screen, if a user motion command using the two pointers is input through the motion input unit, performs a motion task corresponding to the user motion command, and controls the display to display information related to the performed motion task on the display screen.

11. The electronic apparatus as claimed in claim 10, wherein, if a user command to change a distance between the two pointers is input through the motion input unit, the controller performs a task of magnifying or reducing an image displayed on the display screen with reference to the UI.

12. The electronic apparatus as claimed in claim 11, wherein, if a user command to move the two pointers further apart is input, the controller performs a task of magnifying the image displayed on the display screen with reference to the UI, and, if a user command to move the two pointers closer together is input, the controller performs a task of reducing the image displayed on the display screen with reference to the UI.

13. The electronic apparatus as claimed in claim 11 or 12, wherein the controller controls the display to display information related to a ratio in which the image displayed on the display screen is magnified or reduced on the display screen along with the UI.

14. The electronic apparatus as claimed in claim 10, wherein, if a command to move at least one of the two pointers is input through the motion input unit and then an angle that is formed between a line segment formed by the two pointers before the at least one pointer is moved and a line segment formed by the two pointers after the at least one pointer is moved is greater than or equal to a predetermined value, the controller performs a task of rotating the image displayed on the display screen according to the angle.

15. The electronic apparatus as claimed in claim 14, wherein the controller displays information related to the angle by which the image displayed on the display screen is rotated on the display screen along with the UI.
